# EUROPEAN PATENT SPECIFICATION

(11) **EP 1 984 763 B1**
(45) Date of publication and mention of the grant of the patent: **02.09.2020**
(21) Application number: 07703411.4
(22) Date of filing: 12.02.2007
(51) Int. Cl.: G02B 1/10, A47G 1/00, G02B 1/111, C03C 17/00, B82Y 20/00, G02B 1/118, A47G 1/06, G02B 1/11

(54) **METHOD FOR PREPARING ANTI-REFLECTIVE COATINGS AND COATING OBTAINED THEREFROM**
VERFAHREN ZUR HERSTELLUNG VON ANTIREFLEXIONSBESCHICHTUNGEN UND BESCHICHTUNG DIE DARAUS HERVORGEHT.
PROCÉDÉ DE PRÉPARATION DE REVÊTEMENTS ANTI-RÉFLÉCHISSANTS ET REVÊTEMENT OBTENU À PARTIR DE CE PROCÉDÉ

(30) Priority: 14.02.2006 EP 06075305; 10.11.2006 EP 06023433
(43) Date of publication of application: 29.10.2008
(73) Proprietor: DSM IP Assets B.V., 6411 TE Heerlen (NL)
(72) Inventor: THIES, Jens Christoph, NL-6229 AL Maastricht (NL); MEIJERS, Guido Jozefina Wilhelmus, NL-6171 NL Stein (NL); VRIJALDENHOVEN, Patrick Wilhelmus Antonius, NL-6171 TC Stein (NL); ARFSTEN, Nanning Joerg, 52074 Achen (DE); LANGERMANS, Hermanus Adrianus, NL-5615 GB Eindhoven (NL)
(74) Representative: Hansen, Jesper Römer
(86) International application number: PCT/EP2007/001179
(87) International publication number: WO 2007/093341

(56) References cited:
- EP-A- 1 167 313
- EP-A- 1 449 811
- EP-A- 1 479 734
- EP-A- 1 591 804
- EP-A1- 1 445 095
- EP-A2- 0 468 423
- JP-A- 11 319 578
- US-A1- 2005 195 486
- DATABASE WPI Week 200603 Derwent Publications Ltd., London, GB; AN 2006-022476 XP002434046 & JP 2005 272755 A (KONICA MINOLTA OPTO KK) 6 October 2005 (2005-10-06)
- DATABASE WPI Week 200581 Derwent Publications Ltd., London, GB; AN 2005-789913 XP002434047 & JP 2005 309120 A (KONICA MINOLTA OPTO KK) 4 November 2005 (2005-11-04)

## Description

The use of nano-particles to make an anti-reflective coating has been known since the 1940's (US2432484). The optical function is achieved by the effective refractive index of the coating being lower than that of the substrate leading to a gradient of refractive index from that of air to that of the substrate. This leads to a reduction in the amount of light reflected. US6921578 describes a method for preparing anti-reflective coating systems in which a binder (e.g. tetra-ortho-silicate TEOS) is hydrolyzed in the presence of the nano-particles while using an acid catalyst. While this approach can lead to a coating with anti-reflective properties it suffers from a number of draw backs. For example, the process is difficult to implement on an industrial scale as it is not easy to make stable compositions with reproducible properties such as optical performance and mechanical durability.

It has surprisingly being found that coatings with good, reproducible anti-reflective and mechanical properties may be achieved by the use of surface-modified nano-particles with a metal oxide based binder. While not wishing to be bound by theory it is thought that the surface-modification of the nano-particles enables them to form a more stable coating composition with the binder which stability is, surprisingly, further conferred upon the coating when applied to a substrate.

### SUMMARY OF THE INVENTION

The present invention provides a process for preparing an anti-reflective coating on a substrate comprising the steps:
(i) reacting nano-particles with an amount of surface modifying agent selected from alkoxy silanes, thereby forming surface modified particles, wherein the nanoparticles comprise silicon dioxide;
(ii) pre-hydrolysing an alkoxy silane binder;
(iii) mixing the surface modified particles from step (i) with the pre-hydrolysed binder from step (ii), thereby forming a coating composition, wherein the coating composition comprises 6% to 85 % surface modified nano-particles by weight of the solid fraction relative to the final coating composition, and wherein the amount of binder in the coating composition is 1 % or more and 50% or less by weight of the solid fraction; and
(iv) applying the coating composition to a substrate.

Preferably, the process further comprises the step:
(v) curing the coating.

Surface modified particles may be prepared by:
(i) reacting nano-particles in an organic solvent, comprising about 2 wt% or less water, with
(ii) a surface modifying agent comprising reactive groups,
(iii) thereafter adding water to the mixture in an amount sufficient to hydrolyse the reactive groups of the surface modifying agent,
(iv) reacting the mixture for sufficient time to hydrolyse the modifying agent and preferably at least partly grafting the surface modifying agent to the surface of the nano-particles,
(v) preferably in the substantial absence of an acid catalyst.

The process of the invention may further include steps for adjusting properties of an anti-reflective coating having nano-particles and a reactive binder comprising the steps of:
(a) regularly monitoring the optical and mechanical properties of cured coated articles
(b) if the optical and mechanical properties have changed beyond those acceptable in terms of quality control adding pre-hydrolysed binder in such an amount to the coating composition that the chosen balance of optical and mechanical properties is regained.

As used herein, the term "nano-particles" refers to colloidal particles whose primary particle size is less then 1µm, preferably of less than 500 nm, more preferably of less than 350nm.

As used herein, the term "binder" refers to a substance that can chemically cross-link the particles and preferably also between the particles and a substrate.

As used herein, the term "pre-hydrolysing" refers to hydrolysing the alkoxy silane binder precursor to the point that oligomeric species are produced via partial condensation but not to the point that gelation occurs.

As used herein, the term "acid catalyst" refers to acidic species capable of catalysing the hydrolysis of the alkoxy silane binder precursor.

As used herein, the term "by weight of the solid fraction" refers to the weight percentage after removal of all solvent including water.

### DETAILED DESCRIPTION OF THE INVENTION

The coatings preferably have an arithmetic average roughness of about 2 to about 50 nm. The arithmetic average roughness can be measured by Atomic Force Microscopy (AFM) and is preferably about 2 nm or larger, more preferably about 5 nm or larger, even more preferably about 10 nm or larger, even more preferably about 20 nm or larger. The arithmetic average roughness is preferably about 50 nm or lower, more preferably 45 nm or lower.

When in use the coatings preferably exhibit voids in the coating thereby having a porous structure. The voids aid in obtaining anti-reflective properties. Void volume is herewith defined as the space between the particle/binder which, depending on the environmental circumstances, is in principle filled with ambient air. Preferably the voids represent about 15% or more, by volume, of the coating. Preferably the voids represent about 20% or more, by volume, of the coating. Even more preferably the voids represent about 30% or more, by volume of the coating. Preferably the voids represent about 90% or less, by volume, of the coating. More preferably the voids represent about 80% or less, even more preferably 70% or less, by volume, of the coating.

The coatings may be applied to various substrates. Preferred are substrates that may benefit from an anti-reflective coating.

The substrate herein may be organic. For example, the substrate may be an organic polymeric such as polyethylene naphthalate (PEN), polycarbonate or polymethylmethacrylate (PMMA), polyester, or polymeric material with similar optical properties. In this embodiment, it is preferred to use a coating that can be cured at temperatures sufficiently low that the organic material remains substantially in its shape and does not suffer substantially due to thermal degradation. One preferred method is to use a catalyst as described in EP-A-1591804. Another preferred method of cure is described in WO 2005/049757.

The substrate herein may be inorganic; preferably glass or quartz. Preferred is float glass. Generally, a glass plate has a thickness of 0.5 mm or more, preferable 1 mm or more, most preferably, about 1.8 mm or more. Generally, the glass plate has a thickness of about 20 mm or less, preferably about 10 mm or less, more preferably about 6 mm or less, more preferable about 4 mm or less, and most preferred, about 3 mm or less.

The substrate preferably has a high transparency. Preferably the transparency is about 94% or higher at 2 mm thickness and at wavelength between 425 and 675 nm, more preferably about 96% or higher, even more preferably about 97% or higher, even more preferably about 98% or higher.

The substrate is preferably has a size of 10 cm or more by 10 cm or more, more preferably about 20 cm or more by 20 cm or more. The maximum size is somewhat dictated by practical considerations and will generally be 2 by 3 meter or less.

In one embodiment, the anti reflective glass plate has a size of about 20 by 30 cm or multiples thereof, such as preferably about 30 by 40 cm. Another preferred size is about 90 by 130 cm or 180 by 130 cm or multiples thereof. In another embodiment, the anti reflective glass plate preferably has a size of about 30 by 40 inch (about 72 by 96 cm) or multiple thereof, such as for example about 60 by 40 inch (about 144 by 96 cm).

The coating compositions comprise nano-particles, binder and preferably solvent.

The nano-particles are reacted with a surface modifying agent so that particles are obtained which are reactive with the binder. The particles used in the present invention comprise silicon dioxide. Preferably the particles comprise at least 90% by weight of silicon dioxide.

The particles used in the present invention are nano-particles. Preferably the nano-particles have a length of less than 1000 nm, more preferably of less than 500 nm, even more preferably of less than 350nm.

In one embodiment the particles preferably have an average aspect ratio at least 1.5. Preferably the average aspect ratio of the particles is at least 2, more preferably at least 4, even more preferably at least 6, still more preferably at least 8, even more preferably at least 10. Preferably the aspect ratio will be about 100 or lower, preferably about 50 or lower.

The sizes of the particles may be determined by spreading a dilute suspension of the particles over a surface and measuring the sizes of individual particles by using microscopic techniques, preferably scanning electronic microscopy (SEM) or atomic force microscopy (AFM). Preferably the average sizes are determined by measuring the sizes of at least 100 individual particles. The aspect ratio is the ratio between the length and the width of a particle. In case of rods and worm-like particles the length is the largest distance between two points in the particle and the width is the largest diameter as measured perpendicular to the central axis of the particle. Both length and width are measured from the projection of the particles as observed under the microscope.

The coating compositions may comprise a mixture of different types sizes and shapes of particles.

In one embodiment the particles used herein are non-spherical such as, preferably, rod-like or worm-like particles, preferably worm-like particles. Worm-like particles are particles having a central axis that deviates from a straight line. Examples of worm-like particles are known by the tradename Snowtex (IPA-ST-UP, particles have a diameter of 9-15 nm with a length of 40-300 nm), available from Nissan Chemical. Hereinafter, rod-like and worm-like particles are also denoted as elongated particles.

In a preferred embodiment the particles used herein are substantially spherical. Preferably the spherical particles have an average aspect ratio of about 1.2 or lower, preferably of about 1.1 or lower. Preferably the particles have an average size of about 10 nm or larger, preferably 20 nm or larger. Preferably the particles will have an average size of 200 nm or smaller, preferably 150 nm or smaller, even more preferably about 100 nm or smaller. Substantially spherical particles have the advantage that they form coatings where the volume of nano-pores resulting from the space between the particles is small relative to the volume formed by non-spherical particles. Thus the coatings suffer less from filling of the nano-pores via capillary forces which can cause a loss in anti-reflective performance. These particles may have a narrow or broad particle size distribution, preferably a broad particle size distribution.

The particles are generally provided in a solvent. For example, the solvent may be water or an alcohol such as methanol, ethanol or isopropanol (IPA).

In the case where the particles are dispersed in an organic solvent the amount of water is preferably about 2%, by weight, or less, more preferably about 1%, by weight, or less.

The surface modifying agent(s) react with the nano-particle to cause the particle to be activated so that it is more effectively able to react with the binder.. The surface modifying agent used in the present invention is selected from alkoxy silanes, preferably tri and tetra alkoxy silanes, are used. Tetra alkoxy silane is more preferred.

The compositions used in the present invention comprise from 6% to 85%, by weight of the solid fraction, of surface-modified nano-particles. Preferably the compositions comprise from about 10% to about 65%, by weight of the solid fraction, of surface-modified nano-particles.

In one embodiment of the invention, the reaction between the surface modifying agent and the particles is substantially complete. That is, virtually no free surface modifying agent is present in solution. The amount of agent is preferably at least about 1%, by weight, relative to the particles plus surface activating agent. More preferably the amount of agent is at least about 2%, by weight. The amount will generally be less than about 80%, by weight, preferably less than about 60%, by weight. A stable process and dispersion can be achieved with, for example, from 10 to 60%, by weight, of surface modifying agent relative to the particles plus surface modifying agent. With a higher amount of surface activating agent, the particles can be made 5, 10, or 20 nm larger in size, which may be advantageous.

In another embodiment, the reaction between the particles and surface modifying agent is not 'complete', but some binder is left in the solution. If this is the case, no or less binder has to be added during formulating the coating composition.

Generally, the reaction is performed in a solvent. Depending on the chemistry of the binder, many solvents are useful. Suitable examples of solvents include water, non-protic organic solvents, and alcohols. Examples of suitable solvents include, but are not limited to, isopropanol, ethanol, acetone, ethylcellosolve, methanol, propanol, butanol, ethyleneglycol, propyleneglycol, methyl-ethyl-ether, methyl-butyl-ether, 1-methoxy propan-2-ol, toluene, methyl-ethylketone, and mixtures thereof. Preferred are isopropanol, ethanol, methanol, propanol, and mixtures thereof.

In one embodiment of the invention, the reaction is performed in an organic solvent. Preferably, the amount of water will be about 5% or less, by weight, relative to the solvent. This is preferred because when the nano-particles have some acidity on their surface. If the acid groups are concentrated in sufficiently low amount of water, no catalyst is needed for the reaction between the surface modifying agent and the particles. In addition, the reaction preferentially takes place on or near the surface of the particles. Furthermore when the amount of acid catalyst in the coating composition is very low it can have benefits such as greater stability. More preferably, the amount of water is about 20 wt% or less, for example about 10%, 5% or less. Some water may necessary in order to cause hydrolysis of the surface modifying compound. Preferably, the amount of water will be about 1% by weight or more, preferably about 2% by weight or more.

In a preferred embodiment of the invention about equal or more molar amounts of water is used relative to the molar amounts of hydrolysable groups. It is more preferred to use about 3 times or more of water than hydrolysable groups, even more preferred about 5 times or more. Preferably the relative molar amount of water is about 20 times or less than the molar amount of hydrolysable groups, more preferred about 15 times or less.

The reaction of the modifying compound and the particles is preferably such that the reaction is about 80% or more complete, more preferably about 90% or more. This appears to give an advantage with respect to the stability of the properties of the composition. It may be useful - in order to achieve a substantially complete reaction - to heat the reaction mixture. Suitable reaction temperatures include about 50°C or higher, preferably 55°C or higher, more preferably 65°C or higher. Preferably, the temperature is about 100°C or less, preferably about 80°C or less.

It is possible to measure the extent of the reaction with GC and Karl-Fisher titration by measuring the amount of alkanol and water that has been liberated.

It is preferred that the reaction is performed in the absence of substantial amounts of acid catalyst. It is preferred that the reaction is preformed in the absence of substantial amounts of catalyst. It is thought that the absence of catalyst improves the stability of the ultimate coating composition.

The time for the reaction generally will be about 1 hour or more. Generally, the time will be 24 hrs or less.

Preferably, step (i) of the method of the present invention comprises:
(ii) reacting nano-particles in an organic solvent, comprising about 2% or less, preferably 1% or less, even more preferably 0.5%, by weight, or less water, with
   a surface modifying agent comprising reactive groups, wherein the reaction is performed in the absence of an acid catalyst,
(iii) thereafter adding water to the mixture in an amount sufficient to hydrolyse the surface modifying agent,
(iv) reacting the mixture for sufficient time to hydrolyse the modifying agent.

In one embodiment the coating compositions comprise:
(i) surface-modified nano-particles comprising silicon dioxide,
(ii)alkoxy silane binder,
wherein the surface-modified nano-particles are selected from those that form a layer having a minimum reflection of from 0.1% to 2%, preferably 0.2% to 1.25%. The reflectivity of the layer of surface-modified nano-particles is measured by dip coating a 10cm x 10cm piece of float glass substrate in a 500ml sample of surface-modified nano-particles solution to an appropriate quarter wavelength thickness (90nm-130nm dry thickness) such that the wavelength of minimum reflection lies between 500nm and 650nm, and after being cured at 450°C for 4 hours. The reflection being measured using a Minolta CM-2600D spectrophotometer under standard conditions.

The coating composition as applied to substrate comprises a binder, which has the primary function of keeping the surface activated particles attached to each other and the substrate. Preferably the binder forms covalent bonds with the particles and the substrate. For this purpose, the binder, before curing, comprises inorganic compounds with alkyl or alkoxy groups. Further, the binder preferably polymerises itself to form a substantially continuous polymeric network.

The binder of the coating is selected from alkoxy silanes. It has been found that such a coating shows very good mechanical properties and good adhesion to the substrate resulting in for example high puncture resistance, high scratch resistance and good wear resistance.

The binder used in the present invention is selected from alkoxy silanes, preferably tri and tetra alkoxy silanes. Preferably, ethyl silicate is used. Tetra alkoxy silane is most preferred.

The amount of binder in the coating composition is 1% or more, preferably 2% or more, by weight of the solid fraction. Preferably the amount will be about 40% or less, more preferably 25% or less, by weight of the solid fraction. The percentage is calculated as the amount of metal oxide in the binder relative to the amount of metal oxide in the surface-modified nano-particles. Thus the percentage metal oxide of particles plus surface activating compound is used.

The pre-reaction of the binder composition may be performed with a compound to catalyze the conversion of the precursor into the oligomers. In case of alkoxy silane binders as the precursor preferably an acid, for example acetic acid is used as the catalyst. The amount of catalyst can be relatively low, as only the binder has to react.

Preferably a catalyst is used which brings the pH of the solution at about 2 or higher, more preferred about 3 or higher. The pH is preferably about 5.5 or lower, more preferred about 4.5 or lower. Suitable catalysts include, but are not limited to, organic acids like acetic acid, formic acid, nitric acid, citric acid, tartaric acid, inorganic acids like phosphoric acid, hydrochloric acid, sulphuric acid, and mixtures thereof, although acid with buffer capacity are preferred.

The pre-reaction is preferably performed in a solvent, which is preferably a mixture of water and an organic solvent. Depending on the chemistry of the binder, many solvents are useful. Suitable solvents include, but are not limited to, water, non-protic organic solvents, alcohols, and combinations thereof. Examples of suitable solvents include, but are not limited to, isopropanol, ethanol, acetone, ethylcellosolve, methanol, propanol, butanol, ethyleneglycol, propyleneglycol, methyl-ethyl-ether, methyl-butyl-ether, toluene, methyl-ethylketone, and combinations thereof.

In one embodiment of the invention, the reaction is performed in an organic solvent. Preferably, the amount of water will be about 30%, by weight relative to the solvent or less, more preferably about 20%, by weight, or less.

In a preferred embodiment of the invention about equal or more molar amounts of water is used relative to the molar amounts of hydrolysable groups. It is more preferred to use about 3 times or more of water than hydrolysable groups, even more preferred about 5 times or more. Preferably the relative molar amount of water is about 30 times or less than the molar amount of hydrolysable groups, more preferred about 20 times or less.

The reaction is preferably performed at temperatures of about 25°C or higher. Generally, the temperature will be about 100 °C or lower.

The reaction generally takes about 4 hr to 7 days. The extent of the reaction can be determined by testing the steel wool properties of the coating.

The surface-modified particles and the binder are preferably mixed in such a ratio that chosen optical and mechanical properties are obtained. In addition to the particles and binder other components may be added, such as further solvent, catalyst, hydrophobic agent, levelling agent, and the like. The formulation so obtained is named the coating composition.

Typically, the coating compositions comprise:
(i) surface-modified nano-particles comprising silicon dioxide,
(ii) alkoxy silane binder,
wherein the weight ratio of metal oxide in (i) to (ii) is from 99:1 to 1:1.

Preferably the weight ratio of metal oxide is from 85:1 to 3:2, more preferably from 65:1 to 2:1.

Typically, the coating compositions comprise nano-particles comprising silicon dioxide, surface-modification agent selected from alkoxy silanes, and binder wherein the composition comprises:
(i) up to 99.8%, by weight of the solid fraction, of the nano-particles comprising silicon dioxide,
(ii) up to 60%, by weight of the solid fraction, of the surface-modification agent selected from alkoxy silanes, and
(iii) up to 50%, by weight of the solid fraction, of the binder.

Preferably the composition comprises up to 75%, more preferably up to 65%, by weight of the solid fraction, of nano-particles comprising silicon dioxide. Preferably the composition comprises at least 0.1%, more preferably at least 5%, even more preferably at least 10%, by weight of the solid fraction, of nano-particles comprising silicon dioxide.

Preferably the composition comprises up to 50%, more preferably up to 40%, by weight of the solid fraction, of metal oxide based surface-modification agent. Preferably the composition comprises at least 0.1%, more preferably at least 5%, even more preferably at least 10%, by weight of the solid fraction, of metal oxide based surface-modification agent.

Preferably the composition comprises up to 45%, more preferably up to 40%, by weight of the solid fraction, of binder. Preferably the composition comprises at least 5%, by weight of the solid fraction, of binder.

Generally, the coating composition comprises an amount of non-reactive solvent to adjust the viscosity of the particles and binder to such a value that thin layers can be applied to the substrate. Preferably, the viscosity will be about 2.0mPa.s or more, preferably 2.2mPa.s or more, even more preferably about 2.4mPa.s or more. Preferably, the viscosity is about 20mPa.s or less, preferably about 10mPa.s or less, more preferably about 6mPa.s or less, and even more preferably about 3mPa.s or less. The viscosity can be measured with a Ubbelohde PSL ASTM IP no 1 (type 27042).

Preferably the amount of solids in the coating compositions herein is about 5% by weight or less, more preferably about 4%, by weight, or less, even more preferred about 3%, by weight, or less. Preferably the amount of solids is about 0.5%, by weight, or more, more preferably about 1%, by weight, or more, more preferably about 1.5%, by weight, or more.

Any suitable solvent may be used herein. Examples include water, non-protic organic solvents, and alcohols. In one embodiment, an organic solvent is used, more preferably a mixture of water and alcohol is used as the solvent.

The weight percentage of the particles (the amount as originally added to the composition) based on 100% of solids of the coating composition is preferably 20% or more, more preferably 30% or more, even more preferably 40% or more in the final coating. The concentration of solids is the concentration of all components that don't evaporate after the application of the coating composition to the article.

The present coating is preferably such that, when measured for one coated side at a wavelength between 425 and 675 nm (the visible light region), the minimum reflection is about 2% or less, preferably about 1.5% or less, more preferably about 1% or less. The average reflection at one side, over the region of 425 to 675 nm preferably will be about 2.5% or less, more preferably about 2% or less, even more preferably about 1.5% or less, still more preferably about 1% or less. Generally, the minimum in the reflection will be at a wavelength between 425 and 650 nm, preferably at a wavelength of 450 nm or higher, and more preferably at 500 nm or higher. Preferably, minimum is at a wavelength of 600 nm or lower. The optimal wavelength for the human eye is a minimum reflection around 550 nm as this is the wavelength (colour) at which the human eye is most sensitive. In case a colour shade is required, a minimum at lower or higher wavelength can be chosen. The reflection can be measured with any suitable reflectometer or colorimeter as known to the skilled artisan. Generally, the reflection will show a slope or a curve over the 425-675 nm wavelength. The minimum is defined as either a minimum in a curve, or the lower end of the slope, being at 675 or at 425 nm.

Preferably, the reflection of a glass plate (with a coating on two sides) at the wavelength exhibiting a minimum is about 3% or less, preferably about 2% or less, more preferably about 1.5% or less. The average reflection over a 425-675 nm wavelength range is preferably about 4% or less, more preferably about 3% or less, even more preferred about 2.5% or less. Preferably, the reflection will be about 0.3% or higher, such as for example 0.4, 0.5, 0.6 or 0.7% or higher.

Preferably, the light reflection reducing (or anti reflective) coating is a coating that reduces the reflection of light from an article at at least one wavelength between 425 and 675 nm as measured at the normal incident angle for about 30% or more. Measurements are carried out on the coated and uncoated article. Preferably the reduction in reflection is about 50% or more, more preferably about 70% or more, even more preferably about 85% or more. The reduction in reflection as expressed in a percentage is equal to 100x(reflection of the uncoated article - the reflection of the coated article)/(reflection of uncoated article).

The mechanical properties can be tested as steel wool resistance. Preferably, the coating has 'acceptable' steel wool resistance which is defined as less than 10 observable scratches after 10 rubs with 0000 steel wool with a loading of 250 g. More preferably, the steel wool resistance is 'good' which is defined 3 or less observable scratches after 10 rubs with 0000 steel wool with a loading of 250g.

The combination of properties of good anti-reflective characteristic and acceptable steel wool resistance can generally be achieved with an amount of solids of the surface-modified particulate composition of 60%, by weight of the solid fraction, or higher, preferably about 70%, by weight of the solid fraction, or higher. When the particles are relatively large and monodispersed, or in case of elongated particles, it may be possible to use about 50%, by weight of the solid fraction, or more of the surface-modified particulate composition. The weight percentage of pre-hydrolysed binder is 1% or more, preferably about 3% or more, even more preferred about 5% or more. When the surface modifying agent is completely reacted with the particles, the mechanical properties are mainly determined by the amount of pre-hydrolysed binder mixed with the particles. In this case, an amount of about 3% or more, 4% or more, 6%, by weight, or more, relative to the particles is preferred. Preferably, the amount of binder is about 5%, by weight, or more. The amount of binder is 50%, by weight of the solid fraction, or less, preferably about 30% or less, even more preferably about 20% or less.

In one embodiment of the invention, the nano-particles are reacted with 5-20%, by weight of the solid fraction, of surface modifying agent up to substantial completion and are preferably mixed with 8-20%, more preferably 10-15%, by weight of the solid fraction, of pre-hydrolysed binder.

In another embodiment of the invention, the nano-particles are reacted with 30-60% of binder up to substantial completion and are mixed with 3-10%, preferably about 4-6, by weight of the solid fraction, of pre-hydrolysed binder.

The coating composition can be applied to a substrate.

Preferably the coating composition is applied to the article so that the resultant dry coating thickness is about 50nm or greater, preferably about 70nm or greater, more preferably about 90nm or greater. Preferably the dry coating thickness is about 300nm or less, more preferably about 200nm or less, even more preferably about 160 nm or less, still more preferably about 140nm or less.

Generally about 20% or more, preferably about 50% or more, even more preferably about 90% or more, of one of the surfaces of the substrate is coated.

A number of methods are available to apply thin coatings on substrates. Any method of applying a wet coating composition suitable for obtaining the required thickness would be acceptable. Preferred methods include meniscus (kiss) coating, spray coating, roll coating, spin coating, and dip coating. Dip coating is preferred, as it provides a coating on all sides of the substrate that is immersed, and gives a repeatable and constant thickness. Spin coating can easily be used if smaller glass plates are used, such as ones with 20 cm or less in width or length. Meniscus, roll, and spray coating is useful for continuous processes.

The coating preferably has a thickness of 1-10 µm before drying. The required wet thickness is dependant on the solid content of the coating. The thickness is generally measured after drying and curing, but may be measured after drying only, i.e. after evaporation of the non-reactive solvent(s). The thickness of the wet coating is influenced by the viscosity of the coating, and the dip speed in case of dip coating; each technique has its own ways to influence the thickness of a coating. The thickness of the coating when substantially dry (i.e. with about 20 wt% or less of non-reactive solvent relative to the solid material) is generally about 300 nm or less, preferably about 200 nm or less, most preferred about 170 nm or less. Generally, the dry, uncured coating will have a thickness of about 30 nm or more, preferable about 50 nm or more, most preferably about 60 nm or more. Thickness is measured either spectroscopically (reflectometery or ellipsometery) or by directly observing a fracture surface by electron microscopy.

In one embodiment the alkoxy silane binder precursor is cross-linked and converted into the binder. This last step is generally carried out by heating to for example at about 150°C or more, preferably about 200°C or more. Preferably, the temperature will be about 700°C or less, more preferably about 500°C or less. Curing generally takes place in 30 seconds or more. Generally, curing is performed in 10 hours or less, preferably 4 hour or less.

In another embodiment, the binder is cured using a catalyst with temperatures of about 20°C or more, and generally will be 200°C or less, preferably 140°C or less.

In one embodiment of the process, the coating application is applied to a glass plate before a tempering step of that glass plate. The tempering step is normally carried to introduce internal stresses in an ordinary glass plate by virtue of which it will fragment in small pieces when the glass breaks. The tempering step is usually carried out at temperature of up to 600°C. One advantage of the coating according to the invention is that the coating can withstand this tempering process and can even be cured before or during the tempering process. In the later case the curing and tempering process are thus carried out in one step.

Generally, in case of flat substrates such as glass plates, at least one side of the substrate needs to be coated e.g. in case a product is glued to the other (non-coated) side of the substrate. However, in one embodiment of the invention, the substrate is a glass plate that has an anti-reflective coating on both sides. This may be achieved by coating both sides of a glass plate. It is also possible to laminate two glass plates which are coated on one side, whereby the non-coated sides are laminated to each other. It is preferred that a glass plate in use has on both outermost sides an anti-reflective coating, more preferred, an anti-reflective coating according this invention. It is, however, also possible to combine different techniques to obtain anti-reflective or anti-glare properties. In one embodiment one side of a glass plate is coated with an anti-reflective coating made with a process according the present invention, and the other side of the glass is laminated with a transparent film with an anti-glare or anti reflective coating, preferably a coating made according the present invention; the coatings according the present invention may be the same or different in chemical composition. In a further embodiment of the invention the film used to stick two glass plates together may be a UV absorbing film in order to lend UV shielding properties to the picture or image.

Other useful coatings that can be applied on the substrate are antistatic and/or low-e coatings; the low-e coatings being coatings that have a low emission of infra-red, thereby having low-heat emission through the glass plate.

For all coating processes, cleaning is an important step, as small amounts of contaminant such as dust, grease and other organic compounds cause the anti reflective coating, or other coatings to show defects. Cleaning can be done in a number of ways, such as firing (heating up to 600-700°C; applicable if an inorganic substrate is used); and/or cleaning with a cleaning fluid such as soap in demineralised water, alcohol, or acidic or basic detergent systems. When using a cleaning fluid, generally, the glass plate is dried at a temperature between 20°C and 400°C, optionally with applying an airflow.

In one embodiment, the process for making an anti-reflective substrate comprises the step of cleaning the substrate.

In another embodiment the process comprises the further step of subjecting the coated substrate to a quality control step after coating, but before any curing. After coating, but before curing, the anti-reflective properties are well discernable although slightly different from the cured coated substrate. For example, upon cure, the coating may shrink, causing a shift in wavelength at minimum reflection. If substrates like glass plates would be not within specifications, these plates can be taken out before curing, thereby saving the costs of curing. Furthermore, these plates can be cleaned, and used again in the process of the invention.

In one embodiment of the present invention anti-reflective glass obtained according to the process of the present invention can be framed to give picture frames or other framed articles according to the invention. The framed glass plates with the anti-reflective coating are preferably for domestic use.

The present coatings are able to withstand normal household cleaning processes with water, water alcohol mixtures, water detergent mixtures, water alcohol detergent mixtures and other common house-hold cleaning fluids. Examples of commonly used cleaning fluids are Glassex® and Windex® (isopropanol, water, detergent, pH ≈ 10-11), or fluids comprising acetone, methyl-ethyl-ketone, alcohol and water. Generally, the first time an anti-reflective glass plate is cleaned the reflection may change with 0.1-0.4% but thereafter the reflection remains virtually constant. It was unexpected that the nano porous coating does not tear or wear from even regular use of house hold chemicals. Preferably, the coating exhibits a change in reflectivity of about 0.4% or less after 2hrs immersion in Glassex®, more preferably the change is about 0.3% or less. Preferably, the coating exhibits a steel wool resistance, measured as shown in the examples, of A. Preferably, the coating exhibits - after 2 hours immersion in Glassex® - a steel wool rating of B or better.

In order to protect the picture from damage by UV light it is preferred to provide a UV screening or blocking coating on the glass plate. The UV blocking coating may be provided on the glass before applying the anti-reflective coating. This is preferred, because otherwise the micro porous structure and roughness character may decrease and thereby the antireflective properties would be negatively influenced. However, if the UV screening coating does not substantially influence the anti-reflective layer it may be applied on the antireflective layer. UV blocking coatings are known to those skilled in the art, and are e.g. described in US5371138.

In a preferred embodiment of the invention the substrate is glass for use in a picture frame. The picture frames preferably comprise an anti reflective glass plate of the invention, a frame covering the 4 outer sites of the plates and a backing of card board, wood, plastic or other suitable material. Sometimes, the backing is also made of glass. Generally, the backing comprises elements to fasten the glass plate, frame and backing to each other. Such fastening means may also be separate items. Preferably, the backing comprises one or more rings, or the like, or a cord for hanging the picture frame onto a wall.

A frame as used in the present application is a structure to hold the glass plate at a fixed place. In one embodiment, it consists of clamps at at least 3 places of a glass plate (e.g. two top corners and in the middle of the bottom of a square glass plate. Preferably, the clamps are at all corners of the glass plate. In another embodiment, the frame consists of at least a partial enclosure for the glass plate. Generally, at least two sites of the glass plates are enclosed, more preferably two opposite sites. Often all sites are enclosed by a frame. The frame can be of metal, wood, plastic or the like. Any known frame material can be used.

In one embodiment, the frame is a picture frame, the word picture being broadly interpreted as comprising photo's, paintings, posters, etches, drawings and the like.

In another embodiment, the frame is a show-case, comprising on at least one side a glass plate according the invention.

A glass plate is contemplated by the inventors to have a wide meaning, including quartz, polycarbonate or other plate like materials that have a high transparency, preferably a transparency of about 80% or more at 2 mm thickness, more preferably about 90% or more at 2 mm thickness.

A show case according this invention preferably comprises all glass plates to be anti-reflective according this invention. Often, show cases have one, two or three sides which should be transparent and anti reflective.

The present invention furthermore relates to maintaining acceptable quality of the dipping solution, accordingly the process may include steps for adjusting properties of an anti-reflective coating having nano-particles and a reactive binder comprising the steps of:
(a) regularly monitoring the optical and mechanical properties of cured coated articles,
(b) if the optical and mechanical properties have changed beyond those acceptable in terms of quality control adding pre-hydrolysed binder in such an amount to the coating composition that the chosen balance of optical and mechanical properties is regained.

During quality control, or in separate measurements, one can determine whether the products obtained after curing the coating have the chosen and/or required properties. Hence, one can determine whether the properties have changed to such an extent that products are outside the specifications. Where this appears to be the case, generally, the anti-reflective properties are still acceptable (or even relatively good), but the mechanical properties have become unsatisfactory, it is possible to add some pre-hydrolysed binder to the coating solution in order to achieve again satisfactory properties. The amount of binder to add will generally be about 1%, by weight of the solid fraction, or more, preferably about 2% or more. Generally, about 30%, by weight of the solid fraction, or less will be used, preferably about 20% or less. In case too much binder is added, the mechanical properties will be excellent, but the anti-reflective properties will be insufficient. In this case it is possible to add some surface modified particles (for example about 5%, by weight of the solid fraction, or more, but generally less than about 20%, by weight of the solid fraction) to achieve a good balance of properties.

JP2005272755 relates to metal oxide particles and a binder.
JP200509120 discloses hollow silica particles and a binder and a silane coupling agent.
JP11319578 discloses silica particles coated with titanium dioxide and then coated with polysiloxane containing either silica or an alkoxide of silica particles.
EP1 445 095 A1 concerns a composite thin film improving the light-emission efficiency of surface light emitting devices.

## Claims

1. A method for preparing an anti-reflective coating on a substrate comprising the steps:
(i) reacting nano-particles with an amount of surface modifying agent selected from alkoxy silanes, thereby forming surface modified particles, wherein the nanoparticles comprise silicon dioxide;
(ii) pre-hydrolysing an alkoxy silane binder;
(iii) mixing the surface modified particles from step (i) with the pre-hydrolysed binder from step (ii), thereby forming a coating composition, wherein the coating composition comprises 6% to 85 % surface modified nano-particles by weight of the solid fraction relative to the final coating composition, and wherein the amount of binder in the coating composition is 1% or more and 50% or less by weight of the solid fraction; and
(iv) applying the coating composition to a substrate.

2. The process according to claim 1, further comprising the step:
(v) curing the coating.

3. The process according to claim 1 or 2, wherein the nano particles comprise at least 90% by weight silicon dioxide.

4. The process according to any one of claims 1 to 3, wherein the coating composition comprises 10% to 65% surface modified nano-particles by weight of the solid fraction of the composition.

5. The process according to any one of claims 1 to 4, wherein the coating composition comprises at least 0.1 % and up to 65% nano particles by weigth of the solid fraction and at least 0.1 and up to 40 % surface modifying agent by weight of the solid fraction.

6. The process according to any one of claims 1 to 5, wherein the amount of binder in the coating composition is 3% or more and 30% or less by weight of the solid fraction.

7. The process according to any one of claims 1 to 6, wherein the amount of binder in the coating composition is 5% or more and 20% or less by weight of the solid fraction.

8. The method according to any one of claims 1 to 7, wherein the step (i) is performed at a reaction temperature of 50°C or higher.

9. The method according to any one of the preceding claims, wherein the binder is alkoxy silane or ethyl silicate binder which is hydrolysed using an acid catalyst which is used to bring the pH of the solution to about 2 to 5.5.

10. The method according to any one of the preceding claims, wherein step (i) of the method comprises:
(i-i) reacting the nano-particles in an organic solvent, comprising about 2 wt% or less water, with the surface modifying agent comprising reactive groups, wherein the reaction is performed in the absence of an acid catalyst,
(i-ii) thereafter adding water to the mixture in an amount sufficient to hydrolyse the surface modifying agent,
(i-iii) reacting the mixture for sufficient time to hydrolyse the modifying agent.

11. The method according to any one of claims 2 to 10 further comprising the steps of:
(a) regularly monitoring the optical and mechanical properties of cured coated articles;
(b) if the optical and mechanical properties have changed beyond those acceptable in terms of quality control, adding pro-hydrolysed binder in such an amount to the coating composition that the chosen balance of optical and mechanical properties is regained.

12. The method according to claim 1, wherein the reaction of the surface modification agent and nano-particles is performed in the absence of an acid catalyst.

13. The method according to any one of the preceding claims wherein the surface modifying agent is selected from silane tri or tetra alkoxides and mixtures thereof.

14. The method according to any one of the preceding claims, wherein the nano-particles have a primary particle size of less than 350 nm as measured using SEM.

15. The method according to any one of the preceding claims, wherein the nano-particles have a length of less than 350 nm as measured using SEM.

16. The method according to any one of the preceding claims, wherein the binder alkoxy silane is selected from tri and tetra alkoxy silanes.

17. The method according to any one of the preceding claims, wherein in step (iv) applying is done using meniscus coating, spray coating, roll coating, spin coating or dip coating.

18. An anti-reflective coating on a substrate obtained from the method according to any one of the preceding claims.

19. An anti-reflective coating on a substrate according to claim 18, wherein the substrate is glass or quartz.

## Patentansprüche

1. Verfahren zur Herstellung einer Antireflexionsbeschichtung auf einem Substrat, das folgende Schritte umfasst:
(i) Umsetzen von Nanoteilchen mit einer Menge von Oberflächenmodifizierungsmittel, das aus Alkoxysilanen ausgewählt ist, wodurch oberflächenmodifizierte Teilchen gebildet werden, wobei die Nanoteilchen Siliciumdioxid umfassen;
(ii) Vorhydrolysieren eines Alkoxysilan-Bindemittels;
(iii) Mischen der oberflächenmodifizierten Teilchen aus Schritt (i) mit dem vorhydrolysierten Bindemittel aus Schritt (ii), wodurch eine Beschichtungszusammensetzung gebildet wird, wobei die Beschichtungszusammensetzung 6 % bis 85 % oberflächenmodifizierte Nanoteilchen nach Gewicht der Feststofffraktion, bezogen auf die fertige Beschichtungszusammensetzung, umfasst und wobei die Bindemittelmenge in der Beschichtungszusammensetzung 1 % oder mehr und 50 % oder weniger nach Gewicht der Feststofffraktion beträgt; und
(iv) Aufbringen der Beschichtungszusammensetzung auf ein Substrat.

2. Verfahren nach Anspruch 1, das ferner folgenden Schritt umfasst:
(v) Härten der Beschichtung.

3. Verfahren nach Anspruch 1 oder 2, wobei die Nanoteilchen mindestens 90 Gew.-% Siliciumdioxid umfassen.

4. Verfahren nach einem der Ansprüche 1 bis 3, wobei die Beschichtungszusammensetzung 10 % bis 65 % oberflächenmodifizierte Nanoteilchen nach Gewicht der Feststofffraktion, bezogen auf die fertige Beschichtungszusammensetzung, umfasst.

5. Verfahren nach einem der Ansprüche 1 bis 4, wobei die Beschichtungszusammensetzung mindestens 0,1 % und bis zu 65 % Nanoteilchen nach Gewicht der Feststofffraktion und mindestens 0,1 und bis zu 40 % Oberflächenmodifizierungsmittel nach Gewicht der Feststofffraktion umfasst.

6. Verfahren nach einem der Ansprüche 1 bis 5, wobei die Bindemittelmenge in der Beschichtungszusammensetzung 3 % oder mehr und 30 % oder weniger nach Gewicht der Feststofffraktion beträgt.

7. Verfahren nach einem der Ansprüche 1 bis 6, wobei die Bindemittelmenge in der Beschichtungszusammensetzung 5 % oder mehr und 20 % oder weniger nach Gewicht der Feststofffraktion beträgt.

8. Verfahren nach einem der Ansprüche 1 bis 7, wobei Schritt (i) bei einer Reaktionstemperatur von 50 °C oder darüber durchgeführt wird.

9. Verfahren nach einem der vorhergehenden Ansprüche, wobei es sich bei dem Bindemittel um Alkoxysilan- oder Ethylsilikat-Bindemittel handelt, das unter Verwendung eines sauren Katalysators, der zum Einstellen des pH-Werts der Lösung auf etwa 2 bis 5,5 verwendet wird, hydrolysiert wird.

10. Verfahren nach einem der vorhergehenden Ansprüche, wobei Schritt (i) des Verfahrens Folgendes umfasst:
(i-i) Umsetzen der Nanoteilchen in einem organischen Lösungsmittel, das etwa 2 Gew.-% oder weniger Wasser umfasst, mit dem reaktiven Gruppen umfassenden Oberflächenmodifizierungsmittel, wobei die Umsetzung in Abwesenheit eines sauren Katalysators durchgeführt wird,
(i-ii) danach Zugeben von Wasser zu der Mischung in einer Menge, die zur Hydrolyse des Oberflächenmodifizierungsmittels ausreicht,
(i-iii) Umsetzen der Mischung über einen Zeitraum, der zur Hydrolyse des Modifizierungsmittels ausreicht.

11. Verfahren nach einem der Ansprüche 2 bis 10, das ferner folgende Schritte umfasst:
(a) regelmäßiges Überwachen der optischen und mechanischen Eigenschaften von gehärteten beschichteten Artikeln;
(b) bei Veränderung der optischen und mechanischen Eigenschaften über die hinsichtlich Qualitätskontrolle annehmbaren Eigenschaften hinaus Zugeben von vorhydrolysiertem Bindemittel in einer solchen Menge zu der Beschichtungszusammensetzung, dass die gewählte Balance von optischen und mechanischen Eigenschaften wiederhergestellt wird.

12. Verfahren nach Anspruch 1, wobei die Umsetzung des Oberflächenmodifizierungsmittels und der Nanoteilchen in Abwesenheit eines sauren Katalysators durchgeführt wird.

13. Verfahren nach einem der vorhergehenden Ansprüche, wobei das Oberflächenmodifizierungsmittel aus Silantri- oder -tetraalkoxiden und Mischungen davon ausgewählt wird.

14. Verfahren nach einem der vorhergehenden Ansprüche, wobei die Nanoteilchen eine Primärteilchengröße von weniger als 350 nm gemäß Messung mittels REM aufweisen.

15. Verfahren nach einem der vorhergehenden Ansprüche, wobei die Nanoteilchen eine Länge von weniger als 350 nm gemäß Messung mittels REM aufweisen.

16. Verfahren nach einem der vorhergehenden Ansprüche, wobei das Bindemittel-Alkoxysilan aus Tri- und Tetraalkoxysilanen ausgewählt wird.

17. Verfahren nach einem der vorhergehenden Ansprüche, wobei in Schritt (iv) das Zugeben mittels Meniskusbeschichtung, Sprühbeschichtung, Walzenbeschichtung, Aufschleudern oder Tauchbeschichtung erfolgt.

18. Antireflexionsbeschichtung auf einem Substrat, erhalten aus dem Verfahren nach einem der vorhergehenden Ansprüche.

19. Antireflexionsbeschichtung auf einem Substrat nach Anspruch 18, wobei es sich bei dem Substrat um Glas oder Quarz handelt.

## Revendications

1. Procédé pour la préparation d'un revêtement antireflet sur un substrat comprenant les étapes de :
(i) mise en réaction de nanoparticules avec une quantité d'agent de modification de surface choisi parmi des alcoxysilanes, formant ainsi des particules modifiées en surface, les nanoparticules comprenant du dioxyde de silicium ;
(ii) pré-hydrolyse d'un liant de type alcoxysilane ;
(iii) mélange des particules modifiées en surface de l'étape (i) avec le liant pré-hydrolysé de l'étape (ii), formant ainsi une composition de revêtement, la composition de revêtement comprenant de 6 % à 85 % de nanoparticules modifiées en surface par poids de la fraction solide par rapport à la composition de revêtement finale, et la quantité de liant dans la composition de revêtement étant de 1 % ou plus et 50 % ou moins par poids de la fraction solide ; et
(iv) application de la composition de revêtement à un substrat.

2. Procédé selon la revendication 1, comprenant en outre l'étape de :
(v) durcissement du revêtement.

3. Procédé selon la revendication 1 ou 2, les nanoparticules comprenant au moins 90 % en poids de dioxyde de silicium.

4. Procédé selon l'une quelconque des revendications 1 à 3, la composition de revêtement comprenant 10 % à 65 % de nanoparticules modifiées en surface par poids de la fraction solide de la composition.

5. Procédé selon l'une quelconque des revendications 1 à 4, la composition de revêtement comprenant au moins 0,1 % et jusqu'à 65 % de nanoparticules par poids de la fraction solide et au moins 0,1 et jusqu'à 40 % d'agent de modification de surface par poids de la fraction solide.

6. Procédé selon l'une quelconque des revendications 1 à 5, la quantité de liant dans la composition de revêtement étant de 3 % ou plus et 30 % ou moins par poids de la fraction solide.

7. Procédé selon l'une quelconque des revendications 1 à 6, la quantité de liant dans la composition de revêtement étant de 5 % ou plus et 20 % ou moins par poids de la fraction solide.

8. Procédé selon l'une quelconque des revendications 1 à 7, l'étape (i) étant réalisée à une température de réaction de 50 °C ou plus.

9. Procédé selon l'une quelconque des revendications précédentes, le liant étant un liant de type alcoxysilane ou silicate d'éthyle qui est hydrolysé à l'aide d'un catalyseur de type acide qui est utilisé pour amener le pH de la solution à environ 2 à 5,5.

10. Procédé selon l'une quelconque des revendications précédentes, l'étape (i) du procédé comprenant :
(i-i) la mise en réaction des nanoparticules dans un solvant organique, comprenant environ 2 % en poids ou moins d'eau, avec l'agent de modification de surface comprenant des groupes réactifs, la réaction étant réalisée en l'absence d'un catalyseur de type acide,
(i-ii) ensuite, l'ajout d'eau au mélange en une quantité suffisante pour hydrolyser l'agent de modification de surface,
(i-iii) la mise en réaction du mélange pendant un temps suffisant pour hydrolyser l'agent de modification.

11. Procédé selon l'une quelconque des revendications 2 à 10 comprenant en outre les étapes de :
(a) suivi régulier des propriétés optiques et mécaniques des articles revêtus durcis ;
(b) si les propriétés optiques et mécaniques ont changé au-delà de celles acceptables en termes de contrôle qualité, ajout d'un liant pré-hydrolysé à la composition de revêtement en une quantité telle que l'équilibre choisi des propriétés optiques et mécaniques est retrouvé.

12. Procédé selon la revendication 1, la réaction de l'agent de modification de surface et des nanoparticules étant réalisée en l'absence d'un catalyseur de type acide.

13. Procédé selon l'une quelconque des revendications précédentes, l'agent de modification de surface étant choisi parmi des trialcoxydes et des tétraalcoxydes de silane et des mélanges correspondants.

14. Procédé selon l'une quelconque des revendications précédentes, les nanoparticules possédant une grosseur de particule primaire inférieure à 350 nm telle que mesurée à l'aide de MEB.

15. Procédé selon l'une quelconque des revendications précédentes, les nanoparticules possédant une longueur inférieure à 350 nm telle que mesurée à l'aide de MEB.

16. Procédé selon l'une quelconque des revendications précédentes, le liant de type alcoxysilane étant choisi parmi des trialcoxysilanes et des tétraalcoxysilanes.

17. Procédé selon l'une quelconque des revendications précédentes, où dans l'étape (iv) l'application est faite par revêtement par ménisque, revêtement par pulvérisation, revêtement au rouleau, revêtement par centrifugation ou revêtement par trempage.

18. Revêtement antireflet sur un substrat obtenu par le procédé selon l'une quelconque des revendications précédentes.

19. Revêtement antireflet sur un substrat selon la revendication 18, le substrat étant du verre ou du quartz.
